# EUROPEAN PATENT APPLICATION

(11) **EP 4 528 504 A1**
(43) Date of publication of application: **26.03.2025**
(21) Application number: 23819278.5
(22) Date of filing: 09.06.2023
(51) Int. Cl.: G06F 9/48

(54) **DATA PROCESSING METHOD AND APPARATUS, AND DEVICE AND SYSTEM**

(30) Priority: 10.06.2022 CN 202210655939; 19.08.2022 CN 202211001039
(71) Applicant: Huawei Technologies Co., Ltd., Shenzhen, Guangdong 518129 (CN)
(72) Inventor: SUN, Hongwei, Shenzhen, Guangdong 518129 (CN); LI, Guangcheng, Shenzhen, Guangdong 518129 (CN); LI, Xiuqiao, Shenzhen, Guangdong 518129 (CN); GAO, Guijin, Shenzhen, Guangdong 518129 (CN); LE, Yongnian, Shenzhen, Guangdong 518129 (CN); DING, Zhaohui, Shenzhen, Guangdong 518129 (CN); LIU, Huawei, Shenzhen, Guangdong 518129 (CN)
(74) Representative: Gill Jennings & Every LLP
(86) International application number: PCT/CN2023/099530
(87) International publication number: WO 2023/237115

(57) **Abstract**

A data processing method, an apparatus, a device, and a system are disclosed, and relate to the field of data processing. The method includes: A scheduler obtains a to-be-processed job; and controls at least one super node based on a resource requirement of the to-be-processed job to process the to-be-processed job based on a global memory pool of the super node, where the to-be-processed job is a processing request related to a distributed application. In this way, because the global memory pool is a resource that is constructed through unified addressing on storage media of nodes in the super node and that is shared by the nodes in the super node, the nodes in the super node that are connected by using a high-speed interconnection technology share and access the global memory pool to process the to-be-processed job, so that communication between the nodes in the super node via an MPI is avoided, thereby simplifying a programming model of the application that is run by the nodes, effectively reducing I/O communication between the nodes, and fully exerting performance of the super node. Therefore, data processing duration is effectively shortened, and system energy consumption is reduced, to improve system performance.

## Description

This application claims priorities to Chinese Patent Application No. 202210655939.6, filed with the China National Intellectual Property Administration on June 10, 2022 and entitled "KEY PROCESSING METHOD, APPARATUS, AND SECURITY SYSTEM", and to Chinese Patent Application No. 202211001039.6, filed on August 19, 2022 and entitled "DATA PROCESSING METHOD, APPARATUS, DEVICE, AND SYSTEM", both of which are incorporated herein by reference in their entireties.

### TECHNICAL FIELD

This application relates to the field of data processing, and in particular, to a data processing method, an apparatus, a device, and a system.

### BACKGROUND

Currently, jobs of a distributed application (such as big data or a database) are divided into a plurality of tasks, and a plurality of computing nodes communicate with each other to execute the plurality of tasks. As a quantity of computing nodes in a distributed cluster increases greatly, a large amount of input/output (Input/Output, I/O) communication is generated between the computing nodes, resulting in long data processing duration and high system energy consumption. System performance becomes a bottleneck.

### SUMMARY

This application provides a data processing method, an apparatus, a device, and a system, to shorten data processing duration and reduce system energy consumption.

According to a first aspect, a data processing method is provided. The method includes: A scheduler obtains a to-be-processed job, and controls at least one super node based on a resource requirement of the to-be-processed job to process the to-be-processed job based on a global memory pool of the super node. The to-be-processed job is a processing request related to a distributed application.

In this way, because the global memory pool is a resource that is constructed through unified addressing on storage media of nodes in the super node and that is shared by the nodes in the super node, the nodes in the super node that are connected by using a high-speed interconnection technology share and access the global memory pool to process the to-be-processed job, so that communication between the nodes in the super node via a message passing interface (Message Passing Interface, MPI) is avoided, thereby simplifying a programming model of the application that is run by the nodes, effectively reducing I/O communication between the nodes, and fully exerting performance of the super node. Therefore, data processing duration is effectively shortened, and system energy consumption is reduced, to improve system performance.

The high-speed interconnection technology includes at least one of a compute express link (Compute Express Link, CXL) and infiniband (infiniband, IB). Latency between the nodes is less than 1 microsecond, and a bandwidth may reach hundreds of gigabytes/second (Gigabytes/second, GB/S).

In a possible implementation, processing the to-be-processed job based on the global memory pool of the super node includes: A plurality of nodes in the super node run the distributed application compiled based on a single-node programming model to process the to-be-processed job based on the global memory pool.

For example, that a plurality of nodes in the super node run a distributed application compiled based on a single-node programming model to process the job based on the global memory pool includes: The plurality of nodes in the super node run the distributed application compiled based on the single-node programming model, and access the global memory pool based on a memory synchronous access technology to process the to-be-processed job.

In another possible implementation, the controlling at least one super node to process the to-be-processed job based on the global memory pool of the super node includes: controlling at least two super nodes to process the to-be-processed job based on global memory pools of the super nodes. The at least two super nodes communicate with each other via a message passing interface. In this way, communication is performed between the super nodes.

In another possible implementation, that the scheduler controls at least one super node based on a resource requirement of the to-be-processed job includes: determining, based on an aggregation strategy, a system resource, and the resource requirement, the at least one super node that processes the to-be-processed job. The scheduler schedules the job to one super node as much as possible. The nodes in the super node perform distributed processing on the job. In this way, data processing duration latency caused by uneven data segmentation when the nodes in the super node perform cross-node data segmentation based on MPI communication is avoided. Therefore, data processing duration is shortened, system energy consumption is reduced, to improve system performance.

In another possible implementation, the resource requirement indicates a quantity of processes and a quantity of super nodes that are needed for processing the to-be-processed job. Therefore, the scheduler determines the quantity of super nodes based on the quantity of processes needed for processing the to-be-processed job, and schedules the job to one super node as much as possible. The nodes in the super node perform distributed processing on the job, so that the data processing duration is shortened, the system energy consumption is reduced, to improve the system performance. In addition, the scheduler determines, based on the quantity of super nodes, a super node that processes the to-be-processed job.

The resource includes a computing resource and a storage resource, so that the nodes in the super node process the to-be-processed job based on the computing resource, and store, based on the storage resource, data in a process of processing the to-be-processed job.

In another possible implementation, a storage medium in the global memory pool includes a dynamic random access memory (Dynamic Random Access Memory, DRAM) and a storage-class memory (storage-class memory, SCM). In this way, the global memory pool including a plurality of types of storage media is introduced into a system, so that a storage medium for storing data has more possibilities. A matched storage medium is selected to store data, so that a read/write operation can be quickly performed on the system, and a data transmission speed is improved, thereby shortening data processing duration.

In another possible implementation, the method further includes: A computing node in the super node prefetches data from a storage node in the super node based on a prefetch strategy, and stores the data in a local storage space of the computing node in the super node. In this way, the computing node can quickly obtain data, to shorten data processing duration.

In another possible implementation, the method further includes: A computing node in the super node performs a memory operation on the data between a remote storage space and a local storage space based on hot and cold characteristics of the data. Cold data is data that is accessed less frequently. The cold data is migrated from the local storage space to the remote storage space to release the local storage space, improve a data read/write speed, and improve utilization of the local storage space. Hot data is data that is frequently accessed. The hot data is migrated from the remote storage space to the local storage space, so that the computing node obtains needed data as soon as possible, to shorten data processing duration and reduce a computing resource occupied by frequent data reading/writing. The local storage space and the remote storage space may be storage spaces in the global memory pool.

According to a second aspect, a scheduling apparatus is provided. The apparatus includes modules configured to perform the method performed by the scheduler in any one of the first aspect or the possible designs of the first aspect.

According to a third aspect, a data processing apparatus is provided. The apparatus includes modules configured to perform the method performed by the nodes in the super node in any one of the first aspect or the possible designs of the first aspect.

According to a fourth aspect, a scheduler is provided. The scheduler includes at least one processor and a storage. The storage is configured to store a set of computer instructions. When the processor is used as the scheduler according to any one of the first aspect or the possible implementations of the first aspect to execute the set of computer instructions, the processor performs an operation step of the data processing method according to any one of the first aspect or the possible implementations of the first aspect.

According to a fifth aspect, a computing device is provided. The computing device includes nodes connected by using a high-speed interconnection technology and the scheduler according to the fourth aspect. The scheduler is configured to perform an operation step of the data processing method according to any one of the first aspect or the possible implementations of the first aspect.

According to a sixth aspect, a system is provided. The system includes a plurality of super nodes and a scheduler. The scheduler is configured to control at least one super node based on a resource requirement of a to-be-processed job to process the to-be-processed job based on a global memory pool of the super node. The global memory pool is a resource that is constructed through unified addressing on storage media of nodes in the super node and that is shared by the nodes in the super node. The nodes in the super node are connected by using a high-speed interconnection technology. The to-be-processed job is a processing request related to a distributed application. A plurality of nodes in the super node are configured to run the distributed application compiled based on a single-node programming model to process the to-be-processed job based on the global memory pool. At least two super nodes are configured to communicate with each other via a message passing interface.

According to a seventh aspect, a computer-readable storage medium is provided. The computer-readable storage medium includes computer software instructions. When the computer software instructions are run in a computing device, the computing device is enabled to perform an operation step of the method according to any one of the first aspect or the possible implementations of the first aspect.

According to an eighth aspect, a computer program product is provided. When the computer program product runs on a computer, a computing device is enabled to perform an operation step of the method according to any one of the first aspect or the possible implementations of the first aspect.

Based on the implementations provided in the foregoing aspects, implementations in this application may further be combined to provide more implementations.

### BRIEF DESCRIPTION OF DRAWINGS

FIG. 1 is a diagram of an architecture of a data processing system according to an embodiment of this application;
FIG. 2 is a diagram of interconnection between macro cabinets according to an embodiment of this application;
FIG. 3 is a diagram of a deployment scenario of a global memory pool according to an embodiment of this application;
FIG. 4 is a diagram of a storage system with a three-layer structure according to an embodiment of this application;
FIG. 5 is a schematic flowchart of a data processing method according to an embodiment of this application.
FIG. 6 is a schematic flowchart of another data processing method according to an embodiment of this application;
FIG. 7 is a schematic flowchart of data processing according to an embodiment of this application;
FIG. 8 is a diagram of a structure of a scheduling apparatus according to an embodiment of this application;
FIG. 9 is a diagram of a structure of a data processing apparatus according to an embodiment of this application; and
FIG. 10 is a diagram of a structure of a computing device according to an embodiment of this application.

### DESCRIPTION OF EMBODIMENTS

For ease of description, terms in this application are first briefly described.

**A super node (Super Node)** refers to a high-performance cluster constructed by connecting a plurality of nodes by using a high-bandwidth and low-latency inter-chip interconnection bus and a switch. A scale of the super node is greater than a scale of a node in a cache coherent non-uniform memory access (Cache Coherent Non-Uniform Memory Access, CC-NUMA) architecture, and an interconnection bandwidth of nodes in the super node is greater than an interconnection bandwidth of an Ethernet network.

A **programming model (Programming Model)** refers to an architecture for program designing for an application, for example, a shared memory parallel programming (Open MultiProcessing, OpenMP) +MPI model in an HPC field.

A **high-performance computing (High-Performance Computing, HPC) cluster** refers to a computer cluster system. The HPC cluster includes a plurality of computers that are connected together by using various interconnection technologies. The interconnection technology may be, for example, an infiniband (infiniband, IB) technology, a remote direct memory access over converged Ethernet (Remote Direct Memory Access over Converged Ethernet, RoCE), or a transmission control protocol (Transmission Control Protocol, TCP). The HPC provides an ultrahigh floating-point computing capability to meet a computing requirement of a service such as intensive and massive data computing processing. The plurality of computers connected together have a comprehensive computing capability to resolve large-scale computing problems. For example, the HPC cluster is used to resolve large-scale computing problems and computing requirements related to industries such as scientific researches, weather forecast, finance, simulation experiments, biopharmacy, gene sequencing, and image processing. When the HPC cluster is used to resolve the large-scale computing problems, computing time of data processing can be effectively shortened, and computing precision is improved.

**Affinity scheduling (Affinity Scheduling)** means that a scheduler schedules, as much as possible, a job to a small quantity of nodes that are close to each other to achieve computing resource aggregation for the job.

A **message passing interface (Message Passing Interface, MPI)** refers to a parallel communication protocol usually used for communication between computing nodes in a cluster. It may be understood that, data is exchanged between processes of the computing nodes via the MPI.

A **memory operation instruction** may be referred to as a memory semantic function or a memory operation function. The memory operation instruction includes at least one of memory allocation (malloc), memory setting (memset), memory copy (memcpy), memory movement (memmove), memory release (memory release), and memory comparison (memcmp).

The memory allocation is used for allocating a segment of memory to support running of an application.

The memory setting is used for setting a data mode of a global memory pool, for example, initialization.

The memory copy is used for copying data stored in a storage space indicated by a source address (source) to a storage space indicated by a destination address (destination).

The memory movement is used for copying data stored in the storage space indicated by the source address (source) to the storage space indicated by the destination address (destination), and delete the data stored in the storage space indicated by the source address (source).

The memory comparison is used for comparing whether data stored in two storage spaces is equal.

The memory release is used for releasing data stored in a memory to improve utilization of a system memory resource and improve system performance.

To resolve a problem of long data processing duration and high system energy consumption caused because a large amount of I/O communication is generated due to a manner of processing a job by nodes in the super node and performance of the super node cannot be fully utilized, this application provides a data processing method based on a global memory pool of the super node. To be specific, the global memory pool is constructed through unified addressing on storage media of nodes in the super node, and the nodes in the super node share and access the global memory pool to process a job, so that communication between the nodes in the super node via an MPI is avoided, thereby simplifying a programming model of an application that is run by the nodes, effectively reducing I/O communication between the nodes, and fully exerting performance of the super node. In addition, data processing duration latency caused by uneven data segmentation when the nodes in the super node perform cross-node data segmentation based on MPI communication is avoided. In addition, the scheduler schedules a job to one super node as much as possible, and the nodes in the super node perform distributed processing on the job. Therefore, data processing duration is effectively shortened, and system energy consumption is reduced, to improve system performance.

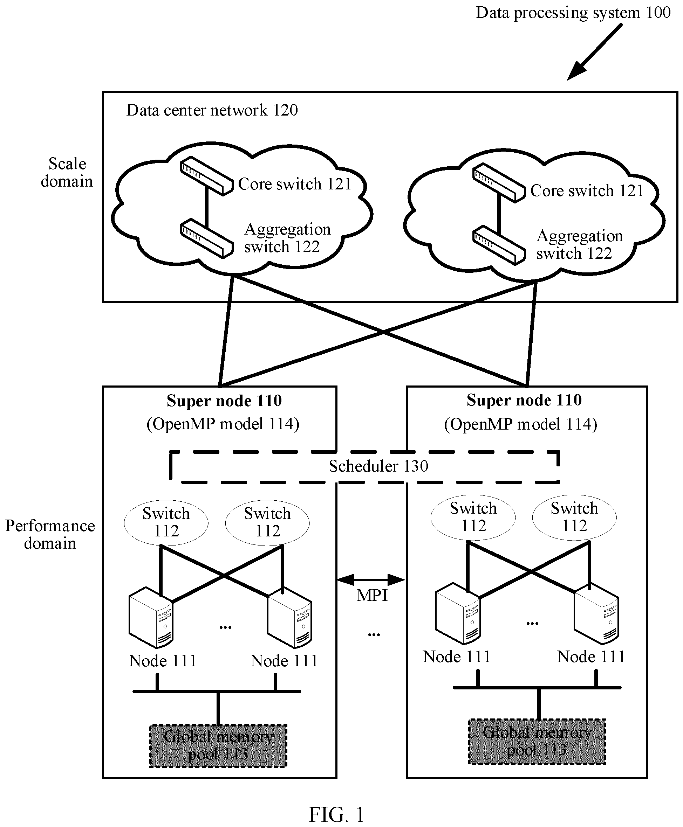

FIG. 1 is a diagram of an architecture of a data processing system according to an embodiment of this application. As shown in FIG. 1, the data processing system 100 is an entity that provides high-performance computing. The data processing system 100 includes a plurality of super nodes 110.

The super node 110 includes a plurality of nodes 111. The node 111 may be a processor, a server, a desktop computer, a controller of a storage array, a storage, or the like. The processor may be an XPU used for data processing, such as a central processing unit (central processing unit, CPU), a graphics processing unit (graphics processing unit, GPU), a data processing unit (data processing unit, DPU), a neural processing unit (neural processing unit, NPU), an embedded neural-network processing unit (neural-network processing unit, NPU), and the like. For example, the super node 110 may include a computing node and a storage node.

The plurality of nodes 111 in the super node 110 are connected by using a high-speed interconnection technology with a high bandwidth and low latency. For example, as shown in FIG. 1, the nodes 111 are connected through a switch 112 by using the high-speed interconnection technology. A bandwidth between the nodes 111 may reach 900 gigabytes/second (Gigabytes/second, GB/S) or 1 terabyte/second (Terabyte/second, TB/S). Latency is 1 microsecond (microsecond, µs).

The plurality of super nodes 110 are connected through a data center network 120. The data center network 120 includes a plurality of core switches 121 and a plurality of aggregation switches 122. The data center network 120 may form a scale domain. The plurality of super nodes 110 may form a performance domain.

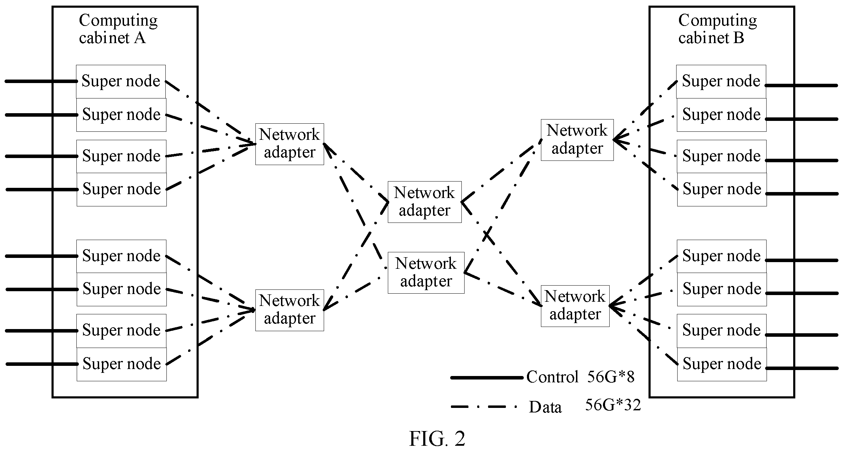

At least two super nodes 110 may form a macro cabinet. The plurality of super nodes 110 included in the data processing system 100 may form a plurality of macro cabinets. Macro cabinets may also be connected through the data center network 120. For example, as shown in FIG. 2, a computing cabinet A and a computing cabinet B include a plurality of super nodes, and the computing cabinet A and the computing cabinet B are interconnected through a network adapter. Control-plane data is transmitted between the computing cabinet A and the computing cabinet B via a control-plane network. Data-plane data is transmitted between the computing cabinet A and the computing cabinet B via a data plane network. A control-plane transmission rate between the computing cabinet A and the computing cabinet B may be 56G*8, and a data-plane transmission rate between the computing cabinet A and the computing cabinet B may be 56G*32.

Further, in addition to a control plane, a high-speed interconnection between the nodes in the super node is also used as a network plane for transmitting data. A global memory pool may be constructed based on the network plane, to implement memory semantic access across nodes in the super node (across nodes for short).

As shown in FIG. 1, the data processing system 100 further includes a scheduler 130. The scheduler 130 is configured to control at least one super node 110 based on a resource requirement of a job, and indicates the at least one super node 110 to process the job based on the global memory pool 113 of the super node 110.

The nodes 111 in the super node 110 run a distributed application compiled based on a single-node programming model to process the job based on the global memory pool 113. For example, in an HPC field, the nodes 111 in the super node 110 run a distributed application compiled based on an OpenMP model 114 to process a service request based on the global memory pool 113. The super nodes 110 communicate with each other via an MPI.

In some embodiments, the scheduler 130 schedules, as much as possible based on an aggregation strategy, a job to a single macro cabinet or super node for completion. Communication between the super nodes via the MPI is avoided as much as possible, thereby simplifying a programming model of the application that is run by the nodes, effectively reducing I/O communication between the nodes, and fully exerting performance of the super node. The scheduler and the computing node may be independent physical devices. The scheduler may also be referred to as a control node, a control device, or a naming node. The computing node may be referred to as a computing device or a data node.

In some other embodiments, the scheduler 130 may receive a processing request sent by a user operation client, and schedule a job indicated by the processing request. The client may be a computer, and may also be referred to as a workstation (workstation).

The data processing system 100 supports running of applications such as big data, a database, high-performance computing, artificial intelligence, distributed storage, and cloud native. In embodiments of this application, service data includes data of applications such as big data, a database, high-performance computing, artificial intelligence (Artificial Intelligence, AI), distributed storage, and cloud native.

The global memory pool provided in this application may include a storage medium in the computing node and a storage medium of the storage node that are in the super node. The storage medium in the computing node includes at least one of a local storage medium in the computing node and an extended storage medium connected to the computing node. The storage medium in the storage node includes at least one of a local storage medium in the storage node and an extended storage medium connected to the storage node.

For example, the global memory pool includes the local storage medium in the computing node and the local storage medium in the storage node.

For another example, the global memory pool includes any one of the local storage medium in the computing node or the extended storage medium connected to the computing node, and the local storage medium in the storage node or the extended storage medium connected to the storage node.

For another example, the global memory pool includes the local storage medium in the computing node, the extended storage medium connected to the computing node, the local storage medium in the storage node, and the extended storage medium connected to the storage node.

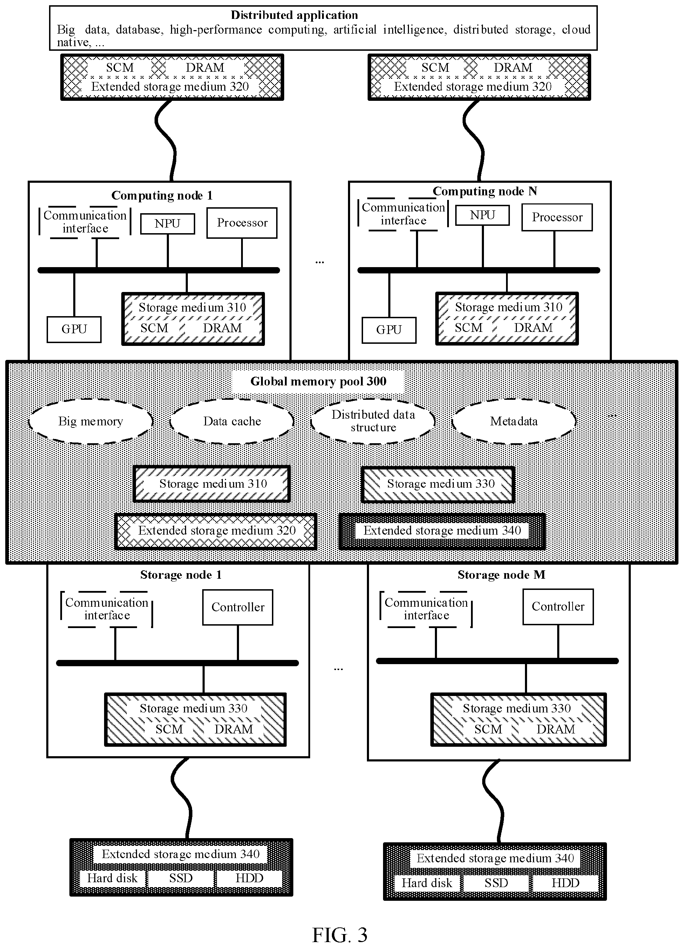

For example, FIG. 3 is a diagram of a deployment scenario of a global memory pool according to an embodiment of this application. The global memory pool 300 includes a storage medium 310 in each of N computing nodes, an extended storage medium 320 connected to each of the N computing nodes, a storage medium 330 in each of M storage nodes, and an extended storage medium 340 connected to each of the M storage nodes.

It should be understood that a storage capacity of the global memory pool may include a part of a storage capacity in the storage medium in the computing node and a part of a storage capacity in the storage medium of the storage node. The global memory pool is a storage medium that can be accessed by both the computing node and the storage node in the super node that undergoes unified addressing. The storage capacity of the global memory pool may be used by the computing node or the storage node via a memory interface such as a big memory, a distributed data structure, a data cache, or metadata. The computing node running an application may use the memory interfaces to perform a memory operation on the global memory pool. In this way, the global memory pool is constructed based on the high-speed interconnection nodes in the super node through unified addressing, and the nodes in the super node share and access the global memory pool to process the job, so that communication between the nodes in the super node via the MPI is avoided, thereby simplifying a programming model of the application that is run by the nodes, effectively reducing I/O communication between the nodes, and fully exerting performance of the super node. In addition, data processing duration latency caused by uneven data segmentation when the nodes perform cross-node data segmentation based on MPI communication is avoided.

The foregoing is described by using an example in which the global memory pool is constructed by using the storage medium in the computing node and the storage medium in the storage node. A deployment manner of the global memory pool is flexible and changeable. This is not limited in this embodiment of this application. For example, the global memory pool is constructed by using the storage medium in the storage node. For another example, the global memory pool is constructed by using the storage medium in the computing node. Using a storage medium in an independent storage node or a storage medium in an independent computing node to construct a global memory pool can reduce occupation of a storage resource on a storage side, and provide a more flexible expansion solution.

A storage is a memory device configured to store a program and various data. A larger storage capacity of the storage indicates a lower access speed. On the contrary, a smaller storage capacity of the storage indicates a higher access speed. The access speed is a data transmission speed when data is written to or read from the storage. The access speed may also be referred to as a read/write speed. The storage may be divided into different levels according to the storage capacity and the access speed.

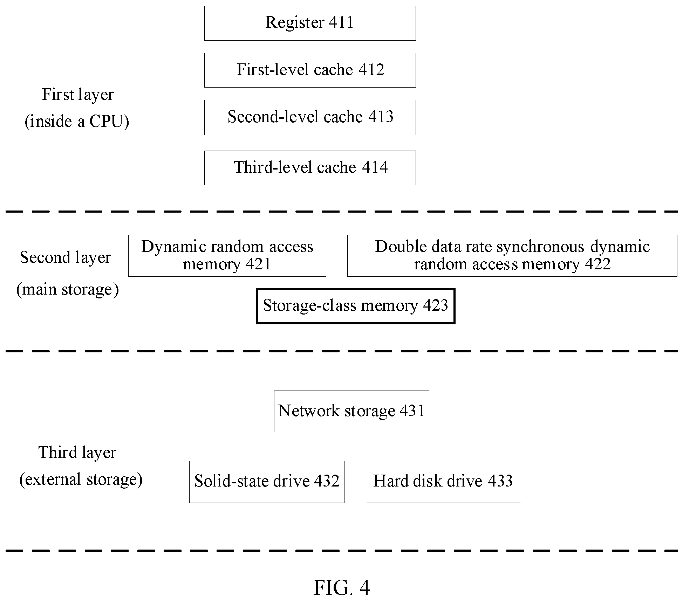

For example, FIG. 4 is a diagram of a storage system with a three-layer structure according to an embodiment of this application. From a first layer to a third layer, storage capacities are increased layer by layer, access speeds are decreased layer by layer, and costs are reduced layer by layer. As shown in FIG. 4, the first layer includes a register 411, a first-level cache 412, a second-level cache 413, and a third-level cache 414 that are located in a central processing unit (central processing unit, CPU). A storage included in the second layer may be used as a main storage of a computer system, for example, a dynamic random access memory (Dynamic Random Access Memory, DRAM) 421, a double data rate synchronous dynamic random access memory (double data rate SDRAM, DDR SDRAM) 422, and a storage-class memory (storage-class memory, SCM) 423. The main storage may be briefly referred to as a main storage or an internal storage, that is, a storage that exchanges information with the CPU. A storage included in the third layer may be used as a secondary storage of the computer system, for example, a network storage 431, a solid-state drive (Solid-State Disk or Solid-State Drive, SSD) 432, and a hard disk drive (Hard Disk Drive, HDD) 433. The secondary storage may be briefly referred to as a secondary storage or an external storage. Compared with the main storage, the external storage has a large storage capacity and a low access speed. It can be learned that a storage closer to the CPU has a smaller capacity, a faster access speed, a larger bandwidth, and lower latency. Therefore, the storage included in the third layer stores data that is not frequently accessed by the CPU, to improve data reliability. The storage included in the second layer may be used as a cache device, configured to store data that is frequently accessed by the CPU, to significantly improve access performance of the system.

According to classification of a type of the storage medium, the storage medium of the global memory pool provided in this embodiment of this application includes a DRAM, an SSD, and an SCM.

In some embodiments, the global memory pool may be set according to a type of a storage medium. To be specific, a type of memory pool is constructed by using a type of storage medium, and different types of global memory pools are constructed by using different types of storage media, so that the global memory pools are used in different scenarios. A computing node selects a storage medium based on an access characteristic of an application, to enhance a system control permission of a user, improve system experience of the user, and extend application scenarios applicable to the system. For example, unified addressing is performed on a DRAM in the computing node and a DRAM in the storage node to construct a DRAM memory pool. The DRAM memory pool is used in an application scenario that requires high access performance, a moderate data capacity, and no data persistence. For another example, unified addressing is performed on an SCM in the computing node and an SCM in the storage node to construct an SCM memory pool. The SCM memory pool is used in an application scenario that is insensitive to access performance, has a large data capacity, and has a requirement for data persistence.

Different storage media have different storage medium characteristics. The storage medium characteristic includes at least one of write latency, read latency, a total storage capacity, an available storage capacity, an access speed, CPU consumption, an energy consumption ratio, and reliability. The write latency is latency of writing data into a storage medium by a node. The read latency is latency of reading data from a storage medium by a node. The storage capacity is a total storage capacity of a storage medium for storing data. The available storage capacity is a remaining storage capacity of the total storage capacity minus a used storage capacity. The access speed is a speed at which a node performs a read/write operation on a storage medium. The CPU consumption is occupancy of a CPU of a node when the node writes data to or reads data from a storage medium. The energy consumption ratio refers to energy (such as electric energy) consumed in unit time. The reliability is durability of data stored in a storage medium.

Next, the following describes in detail implementations of the data processing method according to embodiments of this application with reference to the accompanying drawings.

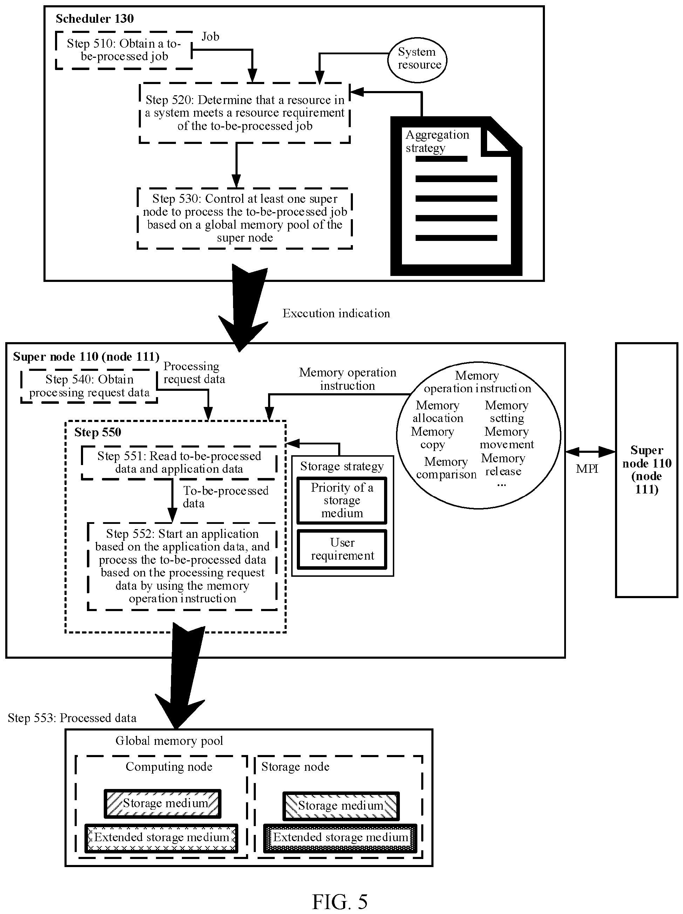

FIG. 5 is a schematic flowchart of a data processing method according to an embodiment of this application. The scheduler 130 and the super node 110 are used as an example herein for description. As shown in FIG. 5, the method includes the following steps.

**Step 510: The scheduler 130 obtains a to-be-processed job.**

In response to a user operation, a client sends a job of a processing request related to a distributed application to the scheduler 130. The scheduler 130 may receive, via the data center network 120, the job sent by the client. The job may include a job identifier and service data. The job identifier uniquely identifies a job. The service data may be data used by a computing node to perform distributed data processing or identification data indicating to-be-processed data.

The user operation may be an operation performed by a user on a user interface to submit a distributed application service. For example, the user operation may be an operation performed by the user on a big data user interface to submit a big data service. The big data service includes a data analysis service, a data query service, a data modification service, and the like. For example, the big data service refers to analyzing personal data and purchasing behavior data of a customer to depict a user profile to implement customer classification, so that a targeted product or a discount product can be recommended to a particular customer, to improve customer satisfaction, strengthen a customer relationship, and the like. For another example, the big data service refers to analyzing a historical sales volume of a product to predict a future sales volume, and finding a reason for a decline in a sales volume or an increase in a sales volume to give a constructive suggestion for improving the sales volume.

**Step 520: The scheduler 130 determines that a resource in a system meets a resource requirement of the to-be-processed job.**

The scheduler 130 may monitor a resource of a super node in the system. The resource includes a computing resource and a storage resource, so that the scheduler 130 schedules a job based on the system resource. The super node in the system may periodically report an available resource to the scheduler 130.

The job submitted by the user also indicates the resource requirement. The scheduler 130 determines, based on an aggregation strategy, the resource requirement, and the system resource, at least one super node that processes the job. If a resource of one super node in the system meets the resource requirement, the job is scheduled to the super node. If a resource of one super node in the system does not meet the resource requirement, the job is scheduled to two super nodes. If no resource of a super node in the system meets the resource requirement, submitting the job by the user fails, and the scheduler 130 may send a submission failure response to the client.

For example, the resource requirement indicates a quantity of processes needed for processing the job. The scheduler 130 determines, from a plurality of super nodes, a super node that meets the process quantity. If a quantity of available processes in one super node in the system meets the quantity of needed processes, the job is scheduled to the super node. If a quantity of available processes in one super node in the system does not meet the quantity of needed processes, and a quantity of available processes in two super nodes meets the quantity of needed processes, the job is scheduled to the two super nodes.

In some embodiments, the resource requirement may further indicate a quantity of super nodes. The scheduler 130 determines at least one super node from the system based on the quantity of super nodes that is indicated by the resource requirement. In addition, if a quantity of available processes in the at least one super node meets the quantity of needed processes, the job is scheduled to the at least one super node.

The aggregation strategy includes a recommendation strategy and a mandatory strategy. The recommendation strategy indicates that another super node is automatically searched for if the scheduler cannot determine a super node that meets the resource requirement. The mandatory strategy indicates that scheduling fails if the scheduler cannot determine a super node that meets the resource requirement. Different strategies may be configured for different applications.

In this way, global memory pooling constructed based on high-speed interconnection nodes in the super node can provide a high-performance distributed application running environment, and a simplified programming model can be implemented by using a single-node programming model. Therefore, during job scheduling, the scheduler uses a resource topology awareness and aggregation strategy to schedule the job to be run in the super node as much as possible, making full use of inside performance of the super node and the simplified programming model. If a resource in the super node cannot meet the requirement, the resource is scheduled to the plurality of super nodes to be run. Messages are exchanged between the super nodes via an MPI.

**Step 530: The scheduler 130 controls the at least one super node to process the to-be-processed job based on the global memory pool of the super node.**

The scheduler 130 sends an execution indication to the at least one super node 110, indicating the at least one super node 110 to process the job based on the global memory pool of the super node. A plurality of nodes in the super node run a distributed application compiled based on the single-node programming model to process the job based on the global memory pool. Each of at least two super nodes processes the job based on the global memory pool, and the super nodes communicate with each other via a message passing interface.

**Step 540: The super node 110 obtains processing request data.**

The super node 110 may receive the job that is of the processing request related to the distributed application and that is sent by the scheduler 130, and convert the processing request into processing request data that conforms to an operation rule of a memory operation instruction, so that the node 111 in the super node 110 performs, based on the memory operation instruction, a memory operation on the processing request data in the global memory pool.

**Step 550: The node 111 in the super node 110 processes the job based on the global memory pool.**

The plurality of nodes in the super node run the distributed application compiled based on the single-node programming model, and access the global memory pool by using a memory synchronous access technology to process the to-be-processed job. For example, the node 111 accesses the global memory pool by using a load/store command, and may access a remote storage space in the global memory pool with respect to a node that processes a job in the global memory pool or a local storage space in the global memory pool with respect to a node that processes a job. The distributed application run by the node does not sense whether the node accesses the remote storage space or the local storage space.

In some embodiments, the node 111 in the super node 110 performs, according to the memory operation instruction, the memory operation on the global memory pool based on the processing request data.

The processing request data indicates an operation performed on the to-be-processed data. For example, the processing request data indicates to obtain a first quarter sales volume of a product A. The to-be-processed data may include an annual sales volume. A specific operation process included in step 550 is described in step 551 to step 553 below.

Step 551: The node 111 reads the to-be-processed data and application data.

The to-be-processed data and the application data may be stored in a storage space such as the global memory pool, a storage medium in a storage node, or a storage medium of a computing node. The node 111 may read the to-be-processed data and the application data from the global memory pool, the storage medium in the storage node, or the storage medium of the computing node. For example, the node 111 reads the application data from a local memory, and reads the to-be-processed data from the global memory pool. The to-be-processed data may be an object that is indicated by processing request data and that needs to be processed. The application data includes an application and application configuration data.

Step 552: The node 111 starts the application based on the application data, and processes the to-be-processed data based on the processing request data by using the memory operation instruction to obtain processed data.

For example, it is assumed that the application data includes a big data application, and the processing request data indicates to analyze a historical sales volume of a product to predict a future sales volume. The node 111 starts the big data application based on big data application data, obtains to-be-processed data, and processes the to-be-processed data.

The node 111 may start the application based on the application data before obtaining the processing request data, or may start the application based on the application data after obtaining the processing request data.

In this way, the global memory pool inside the super node provides a unified memory address space, and may be used for the single-node programming model. The single-node programming model is configured to implement parallel programming and running of multi-thread applications by using the resource inside the super node. Because the super node may provide tens of thousands of processors, a large part of parallel applications may be programmed and run inside the super node. Data processing according to the memory operation instruction may be applied to a full life cycle of data processing. Data processing is performed by using the memory operation instruction, and data exchange is performed based on the global memory pool, to effectively reduce I/O communication between the nodes, and fully exert performance of the super node. Therefore, data processing duration is effectively shortened, and system energy consumption is reduced, to improve system performance.

Step 553: The node 111 writes processed data into a storage space indicated by a first address in the global memory pool.

The node 111 automatically selects, from the global memory pool based on the storage strategy, a storage medium used for storing the processed data. The storage strategy includes an access characteristic of an application, a storage medium characteristic in the global memory pool, and the like. The storage space indicated by the first address includes a storage space of the global memory pool, for example, one of a storage space provided by the storage medium in the computing node and a storage space provided by the storage medium of the storage node.

In some embodiments, the node 111 determines, based on a user requirement and the storage medium characteristic, to write the processed data into the storage space that is indicated by the first address and that is in the global memory pool. The user requirement indicates a requirement related to the storage medium characteristic. The processing request data includes the user requirement. The storage medium characteristic includes at least one of write latency, read latency, a total storage capacity, an available storage capacity, an access speed, CPU consumption, an energy consumption ratio, and reliability.

For example, the node 111 is configured with storage medium characteristic of a plurality of types of storage media. The user requirement indicates an access speed range or a specific access speed, and the node 111 determines, from the global memory pool, a storage medium that meets the user requirement. For example, the user requirement indicates an access speed of a memory. The node 111 selects, from the global memory pool, a storage medium that meets the access speed of the memory, for example, at least one of a DRAM or an SCM. Example 1: The node 111 determines, based on the user requirement and the storage medium characteristic, to write the processed data into a storage space that is of the computing node in the global memory pool and that is indicated by the first address. The storage space that is of the computing node and that is indicated by the first address meets the access speed indicated by the user requirement. Therefore, the processed data is stored in a local memory on a computing side in the global memory pool, to perform local memory access. This effectively shortens data processing duration and improves a data transmission speed.

For another example, the node 111 is configured with an association relationship between a storage medium and a customer level. The user requirement indicates a first customer level. The node 111 determines, from the association relationship based on the first customer level, a storage medium associated with the first customer level, and determines that the storage medium associated with the first customer level is used for storing the processed data. Example 2: The node 111 determines, based on the user requirement and the storage medium characteristic, to write the processed data into a storage space that is of the storage node in the global memory pool and that is indicated by the first address. The storage space that is of the computing node and that is indicated by the first address meets the first customer level indicated by the user requirement.

In this way, when selecting, from the global memory pool, a storage medium for storing the processed data, the node 111 dynamically selects, based on the user requirement of the user for a storage medium characteristic such as an access speed or reliability, a storage medium that meets the user requirement, to ensure a scenario requirement of data processing performance and reliability.

In some other embodiments, the node 111 is configured with priorities that are of a plurality of types of storage media and that are determined based on the storage medium characteristic, and determines, based on priorities that are of the plurality of types of storage media and that are indicated by the storage strategy, the storage medium used for storing the processed data. The priorities of the plurality of types of storage media may be determined based on access speeds of the storage media. For example, an access speed of a memory is higher than an access speed of a hard disk, and the access speed of the hard disk is higher than an access speed of an extended storage medium. The priorities of the plurality of types of storage media may be determined based on priorities of deployment modes. For example, a priority of a local storage medium is higher than the priority of the extended storage medium. The priorities of the plurality of types of storage media may be comprehensively determined based on a plurality of types of storage medium characteristics. The priorities of the plurality of types of storage media are determined based on the priorities of the deployment modes (for example, the local storage medium and the extended storage medium). Priorities of storage media in a same deployment mode may be determined based on access speeds of the storage media.

Optionally, the node 111 may further select, from the plurality of types of storage media that meet the user requirement, a storage medium whose available storage capacity is greater than a threshold as a storage medium for storing the processed data.

The node 111 determines, based on the priorities of the plurality of types of storage media and starting from a storage medium with a highest priority, whether an available storage capacity of the storage medium with the highest priority is greater than the threshold. If the available storage capacity of the storage medium with the highest priority is greater than the threshold, it indicates that the storage medium with the highest priority has a redundant storage space for storing the processed data. Therefore, the storage medium with the highest priority is selected to store the processed data. If the available storage capacity of the storage medium with the highest priority is less than or equal to the threshold, it indicates that the storage medium with the highest priority does not have a redundant storage space for storing the processed data. Therefore, it is determined whether an available storage capacity of a storage medium with a second highest priority is greater than the threshold. The plurality of types of storage media are sequentially traversed, and finally, the storage medium for storing the processed data is determined from the plurality of types of storage media.

It should be noted that, in actual application, the storage strategy may be set based on a service requirement, a scenario requirement, the user requirement, or the like. The foregoing description of the storage strategy is merely an example for description. For example, the storage strategy may alternatively refer to a data localization preference, that is, the processed data is preferentially stored in the local storage medium in the global memory pool. For another example, the storage strategy may alternatively refer to selecting performance first, storage capacity first, cost first, or the like based on a tradeoff between performance and costs of an application.

Before the node 111 selects, based on the storage strategy, the storage medium for storing the processed data, that is, before step 553 is performed, the storage strategy and configuration information of the plurality of types of storage media may be preconfigured.

The storage strategy provided in this embodiment of this application is applicable to at least one application supported by the foregoing data processing system 100, that is, big data, a database, high-performance computing, artificial intelligence, distributed storage, and cloud native. For example, in processing a big data service, processing a task in a big data service, or processing a global task of the system, the node 111 may use a storage strategy when selecting a storage medium used for storing intermediate data.

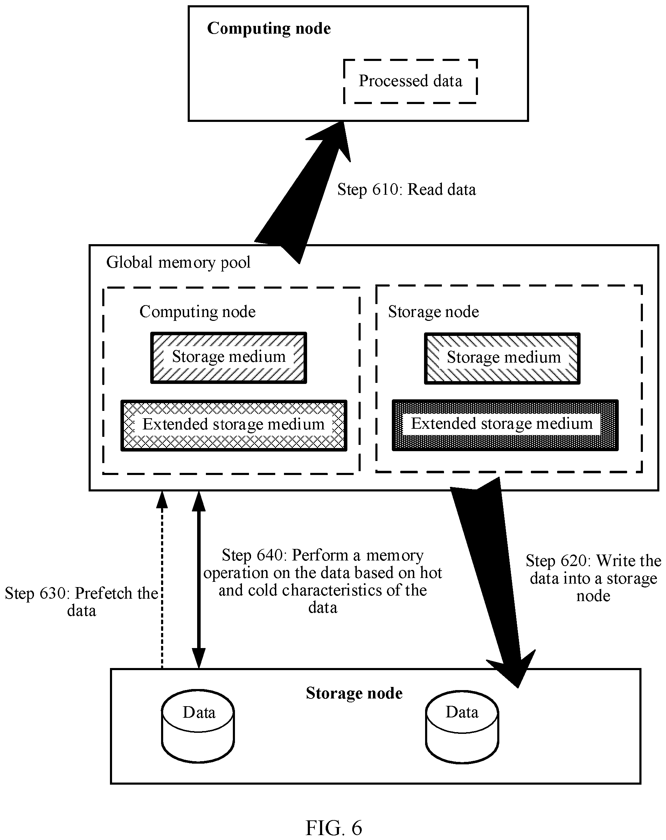

In this embodiment of this application, after the node 111 performs the memory operation on the global memory pool based on the processing request data, that is, after the processed data is written into the global memory pool or data is read from the global memory pool, it indicates that the current processing request ends. The global memory pool provides capabilities of asynchronously writing data into a persistence and capacity layer of the storage node, and prefetching and caching data from the persistence and capacity layer. Then, the node 111 may further read the processed data from the global memory pool. A data processing operation on data stored in the global memory pool is described in FIG. 6 below. FIG. 6 is a schematic flowchart of another data processing method according to an embodiment of this application.

Step 610: A node 111 reads data from a global memory pool based on a first address, and processes the data.

When a computing node needs data stored in the global memory pool to execute a task, the computing node may read related data from the global memory pool. For example, the node 111 obtains the first address from a scheduler 130, and reads needed processed data from the global memory pool based on the first address.

Step 620: The node 111 reads the data from the global memory pool based on the first address, and writes the data into a storage node.

Data stored in the global memory pool needs to be made persistent, that is, when the data stored in the global memory pool is migrated to the storage node, the computing node may read related data from the global memory pool and write the data into the storage node. The storage node writes the processed data into a storage medium in the storage node according to a memory operation instruction. Optionally, the computing node may further store the data written into the storage node.

In some other embodiments, the computing node may further perform step 630, that is, prefetch data from the storage node according to the memory operation instruction, and store the data in the computing node, for example, store the prefetched data in a local storage space in the global memory pool. In this way, the computing node can obtain data as soon as possible, to shorten end-to-end data processing duration.

The computing node may further perform step 640, that is, perform a memory operation on the data between a remote storage space and a local storage space according to the memory operation instruction and hot and cold characteristics of the data. The remote storage space and the local storage space may be storage spaces in the global memory pool, or may be storage spaces in the storage node.

Hot data is data that is frequently accessed, for example, online data. Cold data is data that is accessed less frequently, for example, enterprise backup data, service and operation log data, and bill and statistics data. The hot data has high access frequency and requires high efficiency. Therefore, nearby computing and deployment are performed. The cold data has low access frequency and requires low efficiency, and centralized deployment may be implemented.

According to the system and method for simplifying a programming model and aggregation scheduling based on a unified memory of a super node provided in embodiments of this application, a capability of the super node constructed by a high-speed network of the super node is fully utilized, and a single-node programming model is constructed based on a global memory pool of unified memory semantics that is constructed by the super node, to simplify a previous intra-node single-node programming model and a programming model for inter-node MPI message communication. At an entire cluster level, most jobs are completed in the super node based on the simplified programming model through aggregation scheduling, maximizing high efficiency of memory semantic data exchange. For an ultra-large application, MPI cross-super node message communication is compatible. In this way, simplified programming and performance advantages of the super node are achieved, and a problem that a large cluster can cope with an ultra-large application after a networking scale is increased is resolved.

In actual application, the super node may reach a 100P level, that is, the super node includes 100 processor P levels, and each P has a 100-level CPU core. Therefore, basically, jobs within ten thousands of threads may be completed in a macro cabinet based on a global memory pool of the super node and by using an OpenMP programming model. The jobs within ten thousands of threads usually occupy more than 90% of a supercomputing center. Therefore, more than 90% jobs may be completed by using the simplified programming model based on the global memory pool of the super node, so that programming complexity is greatly simplified. In addition, I/O communication of the system is reduced by using the aggregation strategy, to improve utilization efficiency of the entire system.

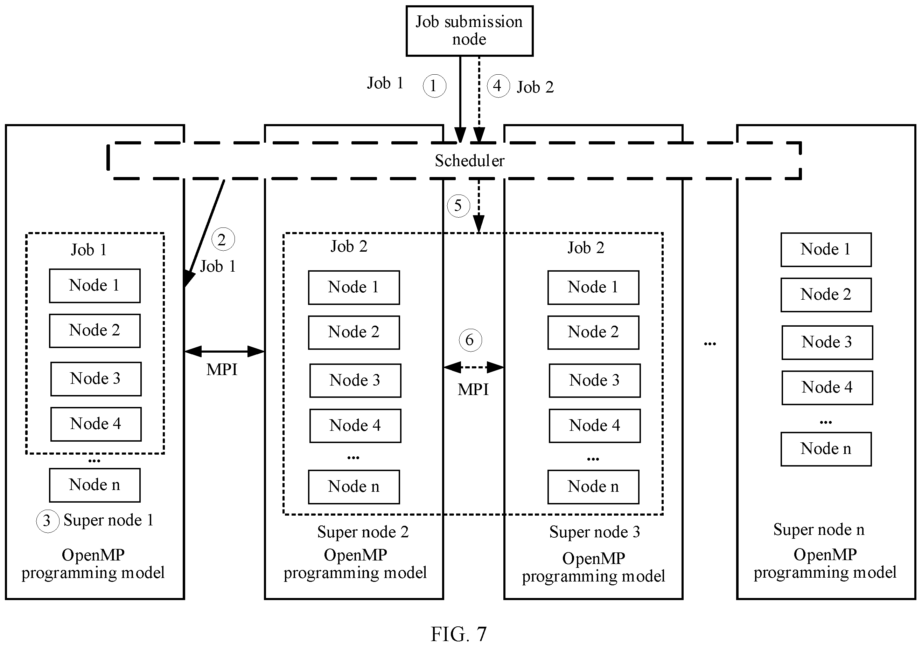

The following describes a data processing process based on the foregoing data processing system by using an example. As shown in FIG. 7, an OpenMP programming model of supercomputing and aggregation scheduling are used as an example to describe a diagram of a full life cycle procedure of a system based on an aggregation strategy and an OpenMP programming model of a global memory pool of a super node.
(1) Job submission phase: ① A user submits a job 1 through a job submission node. The job submission node sends a job submission request to a scheduler. The job submission request includes a resource requirement. For example, the resource requirement of the job 1 indicates that 512 threads are needed to execute the job 1.
(2) Scheduling phase: ② If a super node 1 can provide 512 threads, the scheduler schedules the job 1 to the super node 1 based on the resource requirement of the job 1, and starts the 512 threads. For example, the scheduler determines that there are four nodes in the super node, each node can provide four processors, each processor includes 32 processor cores, and then the four nodes can provide 4 nodes*4P*32 cores, and the job is allocated to the four nodes.
(3) Processing phase: ③ The super node 1 constructs a global memory pool. The four nodes in the super node 1 run an application compiled based on an OpenMP programming model to process the job 1. The four nodes exchange data based on the global memory pool. In this way, cross-node data segmentation is avoided, a long tail problem caused by uneven segmentation between nodes is alleviated, and MPI message communication is avoided.

For another example, ④ the user submits a job 2 through the job submission node, and the job submission node sends a job submission request to the scheduler. The job submission request includes a resource requirement. For example, the resource requirement of the job 2 indicates that 16384 threads are needed to execute the job 2. If a super node 2 and a super node 3 can provide 16384 threads, ⑤ the scheduler schedules the job 2 to the super node 2 and the super node 3 based on the resource requirement of the job 2, and starts the 16384 threads. ⑥ A message is exchanged between the super node 2 and the super node 3 via an MPI. A node in the super node 2 runs an application compiled based on an OpenMP programming model to process the job 2, and a node in the super node 3 runs an application compiled based on an OpenMP programming model to process the job 2.

It may be understood that, to implement functions in the foregoing embodiment, the scheduler includes a corresponding hardware structure and/or software module for performing the functions. A person skilled in the art should be easily aware that, based on the units and the method steps in the examples described in embodiments disclosed in this application, this application can be implemented through hardware or a combination of hardware and computer software. Whether a function is performed by hardware or hardware driven by computer software depends on particular application scenarios and design constraint conditions of the technical solutions.

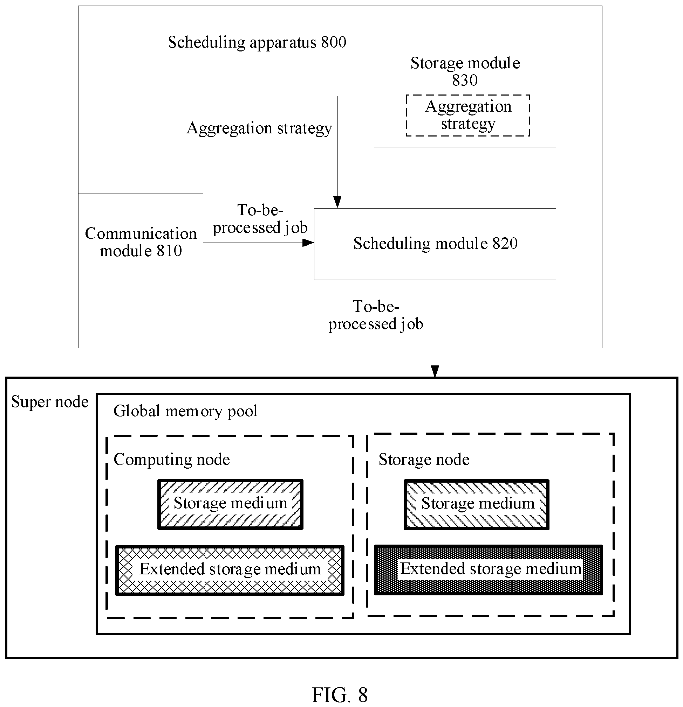

The foregoing describes in detail the data processing method provided in embodiments with reference to FIG. 1 to FIG. 7. The following describes a scheduling apparatus and a data processing apparatus provided in this embodiment with reference to FIG. 8.

FIG. 8 is a diagram of a structure of a possible scheduling apparatus according to an embodiment. The scheduling apparatus may be configured to implement functions of the scheduler in the foregoing method embodiments, and therefore can also implement beneficial effects of the foregoing method embodiments. In this embodiment, the scheduling apparatus may be the scheduler 130 shown in FIG. 5, or may be a module (for example, a chip) used in a server.

As shown in FIG. 8, the scheduling apparatus 800 includes a communication module 810, a scheduling module 820, and a storage module 830. The scheduling apparatus 800 is configured to implement functions of the scheduler 130 in the method embodiment shown in FIG. 5.

The communication module 810 is configured to obtain a to-be-processed job. The to-be-processed job is a processing request related to a distributed application. For example, the communication module 810 is configured to perform step 510 in FIG. 5.

The scheduling module 820 is configured to control at least one super node based on a resource requirement of the to-be-processed job to process the to-be-processed job based on a global memory pool of the super node. The global memory pool is a resource that is constructed through unified addressing on storage media of nodes in the super node and that is shared by the nodes in the super node. For example, the scheduling module 820 is configured to perform step 520 and step 530 in FIG. 5.

The storage module 830 is configured to store an aggregation strategy, so that the scheduling module 820 determines the at least one super node that processes the job.

The scheduling module 820 is specifically configured to determine, based on the aggregation strategy, a system resource, and the resource requirement, the at least one super node that processes the to-be-processed job.

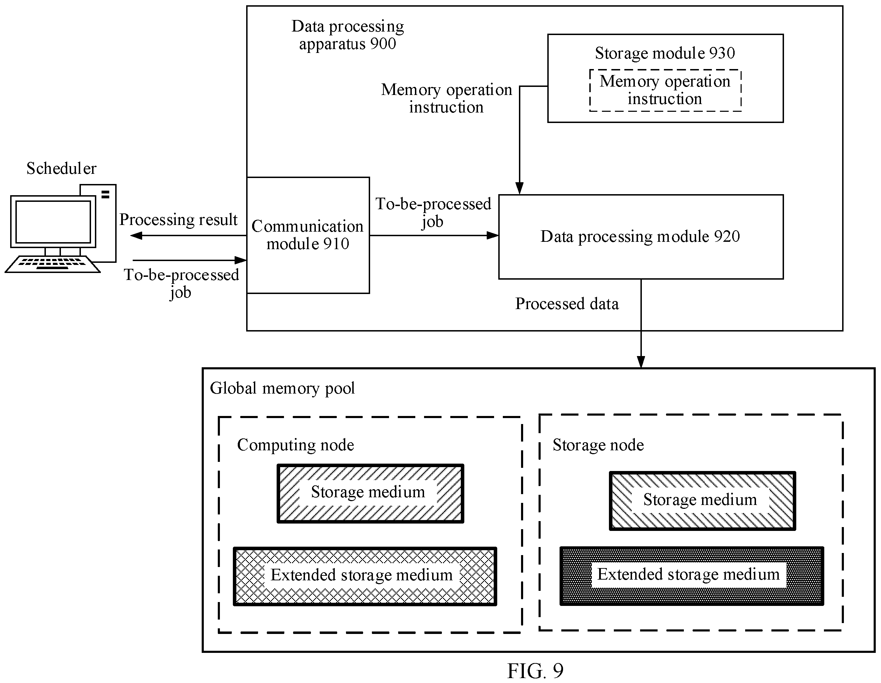

FIG. 9 is a diagram of a structure of a possible data processing apparatus according to an embodiment. The data processing apparatus may be configured to implement functions of the nodes in the super node in the foregoing method embodiments, and therefore can also implement beneficial effects of the foregoing method embodiments. In this embodiment, the data processing apparatus may be the node 111 in the super node 110 shown in FIG. 5, or may be a module (for example, a chip) used in a server.

As shown in FIG. 9, the data processing apparatus 900 includes a communication module 910, a data processing module 920, and a storage module 930. The data processing apparatus 900 is configured to implement functions of the node 111 in the super node 110 in the method embodiment shown in FIG. 5.

The communication module 910 is configured to obtain a to-be-processed job sent by a scheduler. For example, the communication module 910 is configured to perform step 540 in FIG. 5.

The data processing module 920 is configured to run a distributed application compiled based on a single-node programming model to process the to-be-processed job based on a global memory pool. For example, the data processing module 920 is configured to perform step 550 in FIG. 5.

The storage module 930 is configured to store a strategy, so that the data processing module 920 determines a storage location for storing data.

The data processing module 920 is specifically configured to access the global memory pool by using a memory synchronous access technology to process the to-be-processed job.

The data processing module 920 is further configured to prefetch data from a storage node in the super node based on a prefetch strategy, and store the data in a computing node in the super node.

The data processing module 920 is further configured to perform a memory operation on data between a remote storage space and a local storage space based on hot and cold characteristics of the data.

It should be understood that the scheduling apparatus 800 and the data processing apparatus 900 in embodiments of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. When the data processing method shown in FIG. 5 or FIG. 6 may also be implemented by using software, modules of the data processing method may also be software modules, and the scheduling apparatus 800, the data processing apparatus 900, and the modules of the data processing apparatus 900 may also be software modules.

The scheduling apparatus 800 and the data processing apparatus 900 according to embodiments of this application may correspondingly perform the method described in embodiments of this application. The foregoing and other operations and/or functions of units in the scheduling apparatus 800 and the data processing apparatus 900 are respectively used to implement corresponding procedures of the method in FIG. 5 or FIG. 6. For brevity, details are not described herein again.

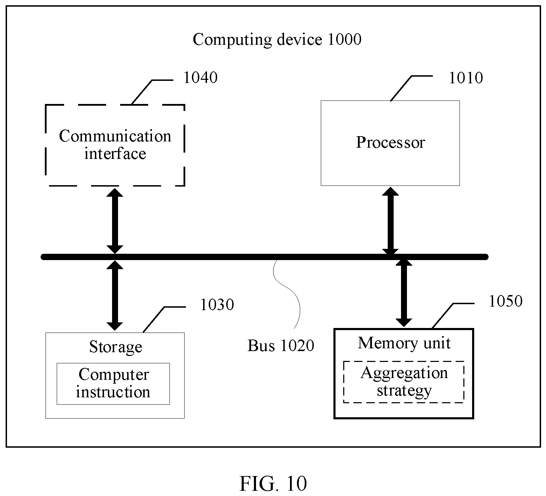

FIG. 10 is a diagram of a structure of a computing device 1000 according to an embodiment. As shown in the figure, the computing device 1000 includes a processor 1010, a bus 1020, a storage 1030, a communication interface 1040, and a memory unit 1050 (which may also be referred to as a main memory (main memory) unit). The processor 1010, the storage 1030, the memory unit 1050, and the communication interface 1040 are connected via the bus 1020.

It should be understood that, in this embodiment, the processor 1010 may be a CPU, or the processor 1010 may be another general-purpose processor, a digital signal processor (digital signal processor, DSP), an ASIC, an FPGA or another programmable logical device, a discrete gate or a transistor logical device, a discrete hardware component, or the like. The general-purpose processor may be a microprocessor or any conventional processor or the like.

Alternatively, the processor may be a graphics processing unit (graphics processing unit, GPU), a neural-network processing unit (neural-network processing unit, NPU), a microprocessor, an ASIC, or one or more integrated circuits configured to control program execution in the solutions of this application.

The communication interface 1040 is configured to implement communication between the computing device 1000 and an external device or a component. In this embodiment, when the computing device 1000 is configured to implement a function of the node 111 shown in FIG. 5, the communication interface 1040 is configured to obtain a to-be-processed job. The to-be-processed job is a processing request related to a distributed application. The node 111 processes the to-be-processed job based on a global memory pool of a super node.

The bus 1020 may include a path, configured to transfer information between the foregoing components (such as the processor 1010, the memory unit 1050, and the storage 1030). In addition to a data bus, the bus 1020 may further include a power bus, a control bus, a status signal bus, and the like. However, for clear description, various types of buses are marked as the bus 1020 in the figure. The bus 1020 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 1020 may be classified into an address bus, a data bus, a control bus, and the like.

In an example, the computing device 1000 may include a plurality of processors. The processor may be a multi-core (multi-CPU) processor. The processor herein may be one or more devices, circuits, and/or computing units configured to process data (for example, computer program instructions). In this embodiment, when the computing device 1000 is configured to implement a function of the node 111 shown in FIG. 5, the processor 1010 may process the to-be-processed job based on the global memory pool of the super node. In this embodiment, when the computing device 1000 is configured to implement a function of the scheduler 130 shown in FIG. 5, the processor 1010 may control at least one super node based on a resource requirement of the to-be-processed job.

It should be noted that, in FIG. 10, only an example in which the computing device 1000 includes one processor 1010 and one memory 1030 is used. The processor 1010 and the storage 1030 each indicate a type of device or component. In a specific embodiment, a quantity of each type of devices or components may be determined based on a service requirement.

The memory unit 1050 may correspond to the global memory pool configured to store information such as processed data in the foregoing method embodiment. The memory unit 1050 may be a volatile memory pool or a non-volatile memory pool, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitation, many forms of RAMs are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 1030 may be corresponding to a storage medium that is configured to store information such as a computer instruction, an aggregation strategy, a memory operation instruction, and a storage strategy in the foregoing method embodiment, for example, a magnetic disk, such as a mechanical hard disk or a solid-state drive.

The computing device 1000 may be a general-purpose device or a dedicated device. For example, the computing device 1000 may be an edge device (for example, a box carrying a chip with a processing capability), or the like. Optionally, the computing device 1000 may alternatively be a server or another device having a computing capability.

It should be understood that the computing device 1000 according to this embodiment may correspond to the scheduling apparatus 800 and the data processing apparatus 900 in this embodiment, and may correspond to a corresponding body in the method according to FIG. 5 or FIG. 6. In addition, the foregoing and other operations and/or functions of modules in the scheduling apparatus 800 and the data processing apparatus 900 are respectively used to implement corresponding procedures of the method in FIG. 5 or FIG. 6. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may exist in the computing device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or some of procedures or functions in embodiments of this application are executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, a computer, a server, or a data center to another website, computer, server, or data center in a wired or wireless manner. The computer-readable storage medium may be any usable medium accessible by the computer, or a data storage device, for example, a server or a data center integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
obtaining, by a scheduler, a to-be-processed job, wherein the to-be-processed job is a processing request related to a distributed application; and
controlling, by the scheduler, at least one super node based on a resource requirement of the to-be-processed job to process the to-be-processed job based on a global memory pool of the super node, wherein the global memory pool is a resource that is constructed through unified addressing on storage media of nodes in the super node and that is shared by the nodes in the super node, and the nodes in the super node are connected by using a high-speed interconnection technology.

2. The method according to claim 1, wherein processing the to-be-processed job based on the global memory pool of the super node comprises:
running, by a plurality of nodes in the super node, the distributed application compiled based on a single-node programming model to process the to-be-processed job based on the global memory pool.

3. The method according to claim 2, wherein the running, by a plurality of nodes in the super node, the distributed application compiled based on a single-node programming model to process the job based on the global memory pool comprises:
running, by the plurality of nodes in the super node, the distributed application compiled based on the single-node programming model, and accessing the global memory pool by using a memory synchronous access technology to process the to-be-processed job.

4. The method according to claim 2 or 3, wherein the controlling at least one super node to process the to-be-processed job based on a global memory pool of the super node comprises:
controlling at least two super nodes to process the to-be-processed job based on global memory pools of the super nodes, wherein the at least two super nodes communicate with each other via a message passing interface.

5. The method according to any one of claims 1 to 4, wherein the controlling, by the scheduler, at least one super node based on a resource requirement of the to-be-processed job comprises:
determining, based on an aggregation strategy, a system resource, and the resource requirement, the at least one super node that processes the to-be-processed job.

6. The method according to any one of claims 1 to 5, wherein the resource requirement indicates a quantity of processes and a quantity of super nodes that are needed for processing the to-be-processed job.

7. The method according to any one of claims 1 to 6, wherein the resource comprises a computing resource and a storage resource.

8. The method according to any one of claims 1 to 7, wherein a storage medium of the global memory pool comprises a dynamic random access memory DRAM and a storage-class memory SCM.

9. The method according to any one of claims 1 to 8, wherein the method further comprises:
prefetching, by a computing node in the super node, data from a storage node in the super node based on a prefetch strategy, and storing the data in the computing node in the super node.

10. The method according to any one of claims 1 to 8, wherein the method further comprises:
performing, by a computing node in the super node, a memory operation on data between a remote storage space and a local storage space based on hot and cold characteristics of the data.

11. A scheduling apparatus, comprising:
a communication module, configured to obtain a to-be-processed job, wherein the to-be-processed job is a processing request related to a distributed application; and
a scheduling module, configured to control at least one super node based on a resource requirement of the to-be-processed job to process the to-be-processed job based on a global memory pool of the super node, wherein the global memory pool is a resource that is constructed through unified addressing on storage media of nodes in the super node and that is shared by the nodes in the super node, and the nodes in the super node are connected by using a high-speed interconnection technology.

12. The apparatus according to claim 11, wherein when controlling the at least one super node based on the resource requirement of the to-be-processed job, the scheduling module is specifically configured to:
determine, based on an aggregation strategy, a system resource, and the resource requirement, the at least one super node that processes the to-be-processed job.

13. The apparatus according to claim 11 or 12, wherein the resource requirement indicates a quantity of processes and a quantity of super nodes that are needed for processing the to-be-processed job.

14. The apparatus according to any one of claims 11 to 13, wherein the resource comprises a computing resource and a storage resource.

15. The apparatus according to any one of claims 11 to 14, wherein a storage medium of the global memory pool comprises a dynamic random access memory DRAM and a storage-class memory SCM.

16. A data processing apparatus, comprising:
a communication module, configured to obtain a to-be-processed job sent by a scheduler; and
a data processing module, configured to run a distributed application compiled based on a single-node programming model to process the to-be-processed job based on a global memory pool.

17. The apparatus according to claim 16, wherein running the distributed application compiled based on the single-node programming model to process the job based on the global memory pool comprises:
accessing the global memory pool by using a memory synchronous access technology to process the to-be-processed job.

18. The apparatus according to claim 16 or 17, wherein controlling at least one super node to process the to-be-processed job based on a global memory pool of the super node comprises:
when the scheduler controls at least two super nodes to process the to-be-processed job based on global memory pools of the super nodes, one super node communicates with another super node via a message passing interface.

19. The apparatus according to any one of claims 16 to 18, wherein the data processing module is further configured to:
prefetch data from a storage node in the super node based on a prefetch strategy, and store the data in a computing node in the super node.

20. The apparatus according to any one of claims 16 to 18, wherein the data processing module is further configured to:
perform a memory operation on data between a remote storage space and a local storage space based on hot and cold characteristics of the data.

21. A scheduler, wherein the scheduler comprises a storage and at least one processor, the storage is configured to store a set of computer instructions; and when executing the set of computer instructions, the processor performs an operation step of the method according to any one of claims 1 to 10.

22. A computing device, wherein a server comprises nodes connected by using a high-speed interconnection technology and the scheduler according to claim 21, and the scheduler is configured to perform an operation step of the method according to any one of claims 1 to 10.

23. A system, wherein the system comprises a plurality of super nodes and a scheduler, the scheduler is configured to control at least one super node based on a resource requirement of a to-be-processed job to process the to-be-processed job based on a global memory pool of the super node, the global memory pool is a resource that is constructed through unified addressing on storage media of nodes in the super node and that is shared by the nodes in the super node, the nodes in the super node are connected by using a high-speed interconnection technology, and the to-be-processed job is a processing request related to a distributed application;
a plurality of nodes in the super node are configured to run the distributed application compiled based on a single-node programming model to process the to-be-processed job based on the global memory pool; and
at least two super nodes are configured to communicate with each other via a message passing interface.
